# EUROPÄISCHE PATENTANMELDUNG

(11) **EP 1 965 199 A1**
(43) Veröffentlichungstag der Anmeldung: **03.09.2008**
(21) Anmeldenummer: 07025256.4
(22) Anmeldetag: 28.12.2007
(51) Int. Cl.: G01N 21/86, G01N 21/78, G01N 21/47

(54) **Gerät und Verfahren zum Auswerten einer Testprobe**

(30) Priorität: 27.02.2007 DE 102007009784
(71) Anmelder: opTricon Entwicklungsgesellschaft für optische Technologien GmbH, 12489 Berlin (DE); Ziegler, Jürgen, 13125 Berlin (DE)
(72) Erfinder: Ziegler, Jürgen, 13125 Berlin (DE); Plickert, Volker, 14156 Brieselang (DE); MELCHIOR, Lutz, 12559 Berlin (DE)
(74) Vertreter: Fischer, Uwe

(57) **Zusammenfassung**

Die Erfindung bezieht sich auf ein Gerät und ein Verfahren zum Auswerten einer Testprobe, beispielsweise einer medizinischen Testprobe.
Erfindungsgemäß ist unter anderem vorgesehen, dass ein Träger (15), z.B. eine elektrische Leiterplatte, vorhanden ist, der die zumindest eine Strahlungsquelle (16a,b) trägt, wobei der Träger (15) und die zumindest eine Strahlungsquelle (16b) derart angeordnet sind, dass elektromagnetische Strahlung der Strahlungsquelle (16a,b) auf eine in das Gerät eingesetzte Testprobe (13) fällt, und der Träger (15) eine Durchtrittsöffnung (16) aufweist, die derart angeordnet ist, dass von der Testprobe (13) reflektierte Strahlung den Träger (15) durch die Durchtrittsöffnung (16) passieren kann.

## Beschreibung

Die Erfindung bezieht sich auf ein Gerät und ein Verfahren zum Auswerten einer Testprobe, beispielsweise einer medizinischen Testprobe.

In der Medizinischen Diagnostik (Point- of- Care Diagnostik, Patentenselbstkontrolle) werden vielfältige Verfahren angewandt, bei denen auf einer Karte in einem Messstreifen bestimmte Substanzen aufgebracht sind, die beim Zusammentreffen mit einer organischen Flüssigkeit chemisch reagieren und dabei einen Farbumschlag bewirken. Solche Streifen sind meistens auf Karten im Checkkartenformat aufgebracht. Diese Farbumschläge werden durch bestimmte Stoffe (Proteine) in den Körperflüssigkeiten verursacht, die bei Reaktionen des Körpers freigesetzt werden. Solche Teststreifen werden zum Beispiel in der Herzinsuffizenzdiagnostik angewandt. Zum Beispiel ist bekannt, dass bei einem Myocardinfakt vom Herzmuskel das Protein Troponin I freigesetzt wird, dessen Konzentration frühestens nach zwei Stunden anhand einer Reaktion mit einem bestimmten Enzym auf einem Teststreifen nachweisbar ist.
Bei einem Myocardinfarkt werden vom Herzmuskel verschiedene spezifische Proteine freigesetzt, neben dem Troponin auch das h-FABP (heart - Fatty Acit Binding Protein), das bereits 20 Minuten nach Infarktbeginn in seiner Konzentration im Blut nachgewiesen werden kann. Der j-FABP - Test ist damit der derzeit schnellste Herzinfarkttest.

Von der Firma rennesens GmbH wird unter dem Namen CardioDetect^{®} ein Kartentest angeboten, der das Protein h-FABP nachweist. Bei dem Test werden einige Tropfen Blut auf ein Testfeld der Karte appliziert und führen innerhalb von 15 Minuten zu einer roten Verfärbung zweier Streifen in einem Testfeld. Einer der Streifen dient als Kontrollstreifen, ob die Funktion der Testkarte sichergestellt ist, der zweite Streifen zeigt die Konzentration des Markers in ng pro Milliliter in der Weise an, dass dessen Farbintensität der Konzentration des h-FABP proportional ist. Je intensiv roter der Streifen ist, um so schwerer ist der Infarkt und bedarf schneller Hilfe, bei einer schwachen Verfärbung liegt nur ein leichter Infarkt vor.

Von der Firma Roche wird ein Reader-System als Laborgerät angeboten, dass prinzipiell ebenfalls diese Funktionen erfüllt, also Teststreifen bezüglich ihrer Farbintensität bewertet. Der Reader kann beispielsweise für Tests der Firma Roch verwendet werden.

Der Erfindung liegt die Aufgabe zugrunde, ein Gerät zum Auswerten einer Testprobe, insbesondere einer medizinischen Testprobe anzugeben, das einen besonders kompakten Aufbau aufweist und dadurch mobil besonders gut einsetzbar ist.

Diese Aufgabe wird durch ein Gerät mit den Merkmalen gemäß Anspruch 1 gelöst. Vorteilhafte Ausgestaltungen der Erfindung sind in Unteransprüchen angegeben.

Danach ist erfindungsgemäß vorgesehen, dass ein Träger vorhanden ist, der zumindest eine Strahlungsquelle trägt, wobei der Träger und die zumindest eine Strahlungsquelle derart angeordnet sind, dass elektromagnetische Strahlung der Strahlungsquelle auf eine in das Gerät eingesetzte Testprobe fällt, der Träger eine Durchtrittsöffnung aufweist, die derart angeordnet ist, dass von der Testprobe reflektierte Strahlung den Träger durch die Durchtrittsöffnung passieren kann.

Durch den vorgesehenen mechanischen Aufbau lässt sich ein sehr kompakter Aufbau des Geräts erreichen.

Vorzugsweise umfasst das Gerät eine Spiegeleinrichtung, die die reflektierte Strahlung nach dem Passieren der Durchtrittsöffnung auf die Messeinrichtung zum Messen der von der Testprobe reflektierten Strahlung umlenkt.

Bevorzugt ist der Träger durch einen Verdrahtungsträger gebildet, der einen elektrischen Anschluss für die zumindest eine Strahlungsquelle bereitstellt. Vorzugsweise ist der Verdrahtungsträger durch eine elektrische Leiterplatte gebildet.

Die Spiegeleinrichtung umfasst bevorzugt ein Prisma.

In dem Strahlengang zwischen der Spiegeleinrichtung und der Messeinrichtung ist vorzugsweise eine Abbildungseinrichtung vorhanden.

Die Abbildungseinrichtung umfasst bevorzugt zumindest eine asphärische Linse.

Die Spiegeleinrichtung lenkt die reflektierte Strahlung nach dem Passieren der Durchtrittsöffnung vorzugsweise um einen Winkel zwischen 60° und 120°, beispielsweise um zumindest annähernd 90°, um.

Die Strahlungsquelle ist bevorzugt zum Erzeugen einer elektromagnetischen Strahlung mit zumindest zwei unterschiedlichen Wellenlängen oder Wellenlängenbereiche geeignet.

Die Messeinrichtung ist bevorzugt geeignet, das Reflexionsverhalten der Testprobe für zumindest zwei unterschiedliche Wellenlängen oder Wellenlängenbereiche unter Bildung zumindest zweier Reflexionsmessergebnisse zu messen.

Die Auswerteinrichtung ist bevorzugt derart ausgestaltet, dass sie die zumindest zwei Reflexionsmessergebnisse zur Bildung des Auswertergebnisses heranzieht.

Die Auswerteinrichtung kann beispielsweise derart ausgestaltet sein, dass sie die zumindest zwei Reflexionsmessergebnisse unter Bildung eines Mittelwertes mittelt und mit dem Mittelwert das Auswertergebnis bildet.

Die Bildung des Mittelwertes erfolgt bevorzugt gewichtet, indem Reflexionsmessergebnisse in Abhängigkeit von der Wellenlänge oder dem Wellenlängenbereich der jeweiligen elektromagnetischen Strahlung unterschiedlich bewertet in die Mittelwertbildung einbezogen werden.

Gemäß einer weiteren bevorzugten Ausgestaltung ist vorgesehen, dass
- mit der Auswerteinrichtung eine Speichereinrichtung in Verbindung steht, in der vorgegebene Auswerttabelle abgespeichert ist, in der Auswertergebnisse in Abhängigkeit von Messwerten für die zumindest zwei Reflexionsmessergebnisse abgelegt sind, und
- die Auswerteinrichtung derart ausgebildet ist, dass sie das Auswertergebnis aus der vorgegebenen Auswerttabelle in Abhängigkeit von den zumindest zwei Reflexionsmessergebnissen ausliest.

Gemäß einer weiteren bevorzugten Ausgestaltung ist vorgesehen, dass die Strahlungsquelle zumindest zwei Strahlungselemente umfasst, die elektromagnetische Strahlung mit unterschiedlichen Wellenlängen oder Wellenlängenbereichen erzeugen.

Gemäß einer anderen bevorzugten Ausgestaltung ist vorgesehen, dass die Strahlungsquelle für die zumindest zwei unterschiedlichen Wellenlängen oder Wellenlängenbereiche wellenlängenmäßig durchstimmbar ist.

Die Strahlungsquelle kann bevorzugt zumindest zwei der Farben aus der Farbgruppe mit den Farben rot, grün und blau erzeugen.

Vorzugsweise umfasst die Strahlungsquelle zumindest drei Strahlungselemente zum Erzeugen der Farben rot, grün und blau.

Gemäß einer weiteren bevorzugten Ausgestaltung ist vorgesehen, dass die Strahlungsquelle wellenlängenmäßig derart breitbandig ist, dass sie für die zumindest zwei unterschiedlichen Wellenlängen oder Wellenlängenbereiche die elektromagnetische Strahlung gleichzeitig erzeugen kann.

Gemäß einer weiteren bevorzugten Ausgestaltung ist vorgesehen, dass zumindest ein Filter zum Trennen der Wellenlängen der von der Testprobe reflektierten Strahlung vorhanden ist.

Vorzugsweise ist ein Filter vorhanden, das für die eine der zumindest zwei Wellenlängen oder Wellenlängenbereiche durchlässig oder undurchlässig ist, und dass ein weiteres Filter vorhanden ist, das für die andere der zumindest zwei Wellenlängen oder Wellenlängenbereiche durchlässig bzw. undurchlässig ist.

Die Strahlungsquelle erzeugt bevorzugt als elektromagnetische Strahlung sichtbares Licht, infrarotes Licht oder ultraviolettes Licht.

Vorzugsweise umfassen die Strahlungsquelle oder die Strahlungselemente zumindest einen Laser oder eine Leuchtdiode.

Die Messeinrichtung wird bevorzugt durch eine Kamera, insbesondere eine ein- oder zweidimensionale CCD-Kamera oder eine ein- oder zweidimensionale CCD-Sensormatrix gebildet.

Der Erfindung liegt außerdem die Aufgabe zugrunde, ein Gerät zum Auswerten einer Testprobe, insbesondere einer medizinischen Testprobe anzugeben, das besonders zuverlässige Messergebnisse zu erreicht.

Diese Aufgabe wird gelöst durch ein Gerät zum Auswerten einer Testprobe, insbesondere einer medizinischen Testprobe, mit
- zumindest einer Strahlungsquelle zum Erzeugen einer elektromagnetischen Strahlung mit einer vorgegebenen Wellenlänge oder einem vorgegebenen Wellenlängenbereich,
- einer Messeinrichtung zum Messen der von der Testprobe reflektierten Strahlung und
- einer Auswerteinrichtung, die das Reflexionsmessergebnis der Messeinrichtung auswertet und damit ein Auswertergebnis bildet,
- wobei die Strahlungsquelle zum Erzeugen einer elektromagnetischen Strahlung mit zumindest zwei unterschiedliche Wellenlängen oder Wellenlängenbereiche geeignet ist,
- wobei die Messeinrichtung geeignet ist, das Reflexionsverhalten der Testprobe für zumindest zwei unterschiedliche Wellenlängen oder Wellenlängenbereiche unter Bildung zumindest zweier Reflexionsmessergebnisse zu messen, und
- wobei die Auswerteinrichtung derart ausgestaltet ist, dass sie die zumindest zwei Reflexionsmessergebnisse zur Bildung des Auswertergebnisses heranzieht.

Durch die Verwendung zumindest zweier unterschiedlicher Wellenlängen oder Wellenlängenbereiche lässt sich die Messgenauigkeit gegenüber vorbekannten Geräten deutlich erhöhen.

Vorzugsweise ist die Auswerteinrichtung derart ausgestaltet, dass sie die zumindest zwei Reflexionsmessergebnisse unter Bildung eines Mittelwertes mittelt und mit dem Mittelwert das Auswertergebnis bildet.

Die Bildung des Mittelwertes erfolgt bevorzugt gewichtet, indem Reflexionsmessergebnisse in Abhängigkeit von der Wellenlänge oder dem Wellenlängenbereich der jeweiligen elektromagnetischen Strahlung unterschiedlich bewertet in die Mittelwertbildung einbezogen werden.

Gemäß einer weiteren bevorzugten Ausgestaltung ist vorgesehen, dass
- mit der Auswerteinrichtung eine Speichereinrichtung in Verbindung steht, in der eine vorgegebene Auswerttabelle abgespeichert ist, in der Auswertergebnisse in Abhängigkeit von Messwerten für die zumindest zwei Reflexionsmessergebnisse abgelegt sind, und
- die Auswerteinrichtung derart ausgebildet ist, dass sie das Auswertergebnis aus der vorgegebenen Auswerttabelle in Abhängigkeit von den zumindest zwei Reflexionsmessergebnissen ausliest.

Auch kann die Strahlungsquelle beispielsweise zumindest zwei Strahlungselemente umfassen, die elektromagnetische Strahlung mit unterschiedlichen Wellenlängen oder Wellenlängenbereichen erzeugen.

Auch kann die Strahlungsquelle wellenlängenmäßig durchstimmbar sein für die zumindest zwei unterschiedlichen Wellenlängen oder Wellenlängenbereiche.

Die Strahlungsquelle kann vorzugsweise zumindest zwei der Farben aus der Farbgruppe mit den Farben rot, grün und blau erzeugen.

Die Strahlungsquelle umfasst vorzugsweise zumindest drei Strahlungselemente zum Erzeugen der Farben rot, grün und blau.

Die Strahlungsquelle ist vorzugsweise wellenlängenmäßig derart breitbandig, dass sie für die zumindest zwei unterschiedlichen Wellenlängen oder Wellenlängenbereiche die elektromagnetische Strahlung gleichzeitig erzeugen kann.

Vorzugsweise ist zumindest ein Filter zum Trennen der Wellenlängen der von der Testprobe reflektierten Strahlung vorhanden.

Gemäß einer weiteren bevorzugten Ausgestaltung ist vorgesehen, dass ein Filter vorhanden ist, das für die eine der zumindest zwei Wellenlängen oder Wellenlängenbereiche durchlässig oder undurchlässig ist, und dass ein weiteres Filter vorhanden ist, das für die andere der zumindest zwei Wellenlängen oder Wellenlängenbereiche durchlässig bzw. undurchlässig ist.

Gemäß einer weiteren bevorzugten Ausgestaltung ist vorgesehen, dass die Strahlungsquelle als elektromagnetische Strahlung sichtbares Licht, infrarotes Licht oder ultraviolettes Licht erzeugt.

Die Strahlungsquelle oder die Strahlungselemente umfassen bevorzugt zumindest einen Laser oder eine Leuchtdiode.

Die Messeinrichtung kann durch eine Kamera, insbesondere eine ein- oder zweidimensionale CCD-Kamera oder eine ein- oder zweidimensionale CCD-Sensormatrix gebildet sein.

Der Erfindung liegt die außerdem die Aufgabe zugrunde, ein Verfahren zum Auswerten einer Testprobe, insbesondere einer medizinischen Testprobe anzugeben, mit dem sich besonders zuverlässige Messergebnisse erreichen lassen.

Diese Aufgabe wird gelöst durch ein Verfahren zum Auswerten einer Testprobe, insbesondere einer medizinischen Testprobe, bei dem elektromagnetische Strahlung mit einer vorgegebenen Wellenlänge oder einem vorgegebenen Wellenlängenbereich auf die Testprobe gerichtet wird und die von der Testprobe reflektierte Strahlung unter Bildung eines Auswertergebnisses ausgewertet wird, wobei das Reflexionsverhalten der Testprobe für zumindest zwei unterschiedliche Wellenlängen oder Wellenlängenbereiche unter Bildung zumindest zweier Reflexionsmessergebnisse bestimmt wird und die zumindest zwei Reflexionsmessergebnisse zur Bildung des Auswertergebnisses herangezogen werden.

Bevorzugt ist vorgesehen, dass die zumindest zwei Reflexionsmessergebnisse unter Bildung eines Mittelwertes gemittelt werden und mit dem Mittelwert das Auswertergebnis gebildet wird.

Die Bildung des Mittelwertes erfolgt vorzugsweise gewichtet, indem Reflexionsmessergebnisse in Abhängigkeit von der Wellenlänge oder dem Wellenlängenbereich der jeweiligen elektromagnetischen Strahlung unterschiedlich bewertet in die Mittelwertbildung einbezogen werden.

Das Auswertergebnis wird vorzugsweise aus einer vorgegebenen Auswerttabelle ausgelesen, in der Auswertergebnisse in Abhängigkeit von Messwerten für die zumindest zwei Reflexionsmessergebnisse abgelegt sind.

Die elektromagnetische Strahlung für die zumindest zwei unterschiedliche Wellenlängen oder Wellenlängenbereiche wird bevorzugt mit zumindest zwei unterschiedlichen Strahlungselementen erzeugt.

Gemäß einer weiteren bevorzugten Ausgestaltung ist vorgesehen, dass die elektromagnetische Strahlung für die zumindest zwei unterschiedlichen Wellenlängen oder Wellenlängenbereiche mit einem durchstimmbaren Strahlungselement erzeugt wird.

Vorzugsweise wird die Testprobe mit den zumindest zwei unterschiedlichen Wellenlängen oder Wellenlängenbereichen gleichzeitig bestrahlt und die zumindest zwei Reflexionsmessergebnisse werden gleichzeitig bestimmt.

Gemäß einer weiteren bevorzugten Ausgestaltung ist vorgesehen, dass die Testprobe mit den zumindest zwei unterschiedlichen Wellenlängen oder Wellenlängenbereichen zeitlich nacheinander bestrahlt wird und die zumindest zwei Reflexionsmessergebnisse zeitlich nacheinander bestimmt werden.

Gemäß einer weiteren bevorzugten Ausgestaltung ist vorgesehen, dass die Testprobe mit einer elektromagnetische Strahlung mit einem Spektrum bestrahlt wird, das zumindest zwei unterschiedliche Wellenlängen oder Wellenlängenbereiche aufweist, und dass die reflektierte Strahlung unter Bildung der Reflexionsmessergebnisse wellenlängenselektiv gemessen wird.

Vorzugsweise wird zum wellenlängenselektiven Messen der reflektierten Strahlung mindestens ein Filter eingesetzt.

Als elektromagnetische Strahlung wird bevorzugt sichtbares Licht, infrarotes Licht oder ultraviolettes Licht verwendet.

Gemäß einer weiteren bevorzugten Ausgestaltung ist vorgesehen, dass eine medizinische Testprobe mit zumindest einem Testabschnitt ausgewertet wird, der zuvor mit einer Körperflüssigkeit, beispielsweise Vollblut, Plasma oder Serum, in Kontakt gebracht worden ist.

Außerdem wird es als vorteilhaft angesehen, wenn bei dem Gerät Befestigungsmittel zum Anbringen eines Tragegurts vorhanden sind. Durch solche Befestigungsmittel wird das Gerät einfach tragbar und besonders universell einsetzbar. Die Tragbarkeit wird im Übrigen auch als selbständiger Erfindungsaspekt angesehen. Als selbständige Erfindung angesehen wird also auch ein Gerät zum Auswerten einer Testprobe, insbesondere einer medizinischen Testprobe, dadurch gekennzeichnet, dass das Gerät Befestigungsmittel zum Anbringen eines Tragegurts aufweist.

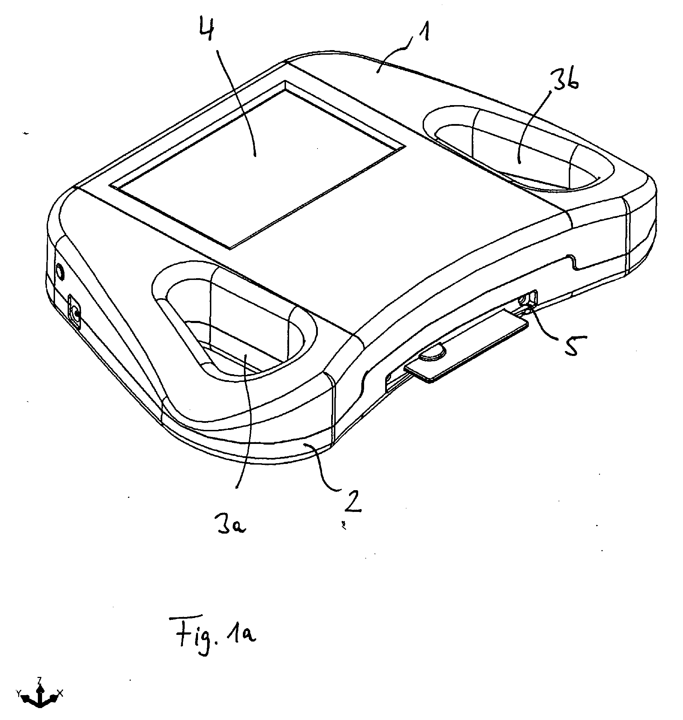

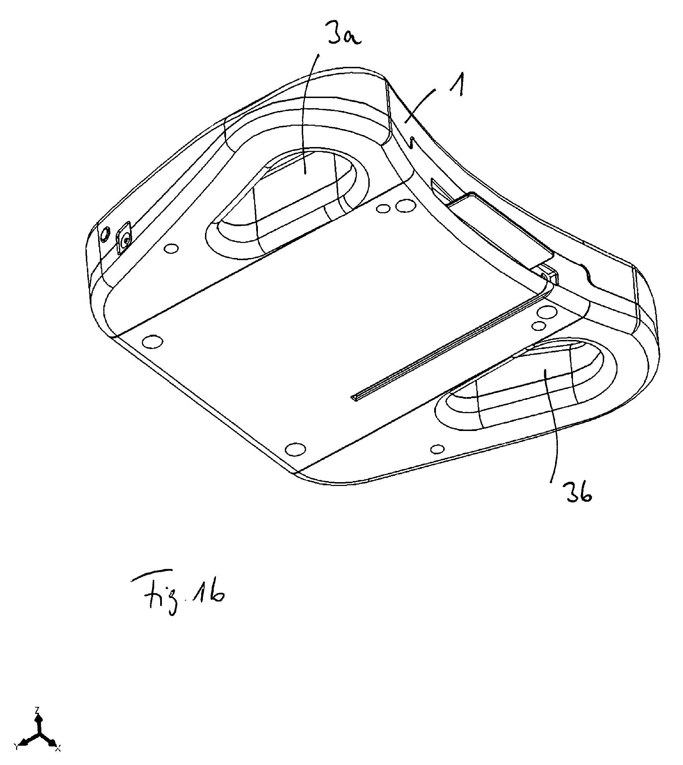

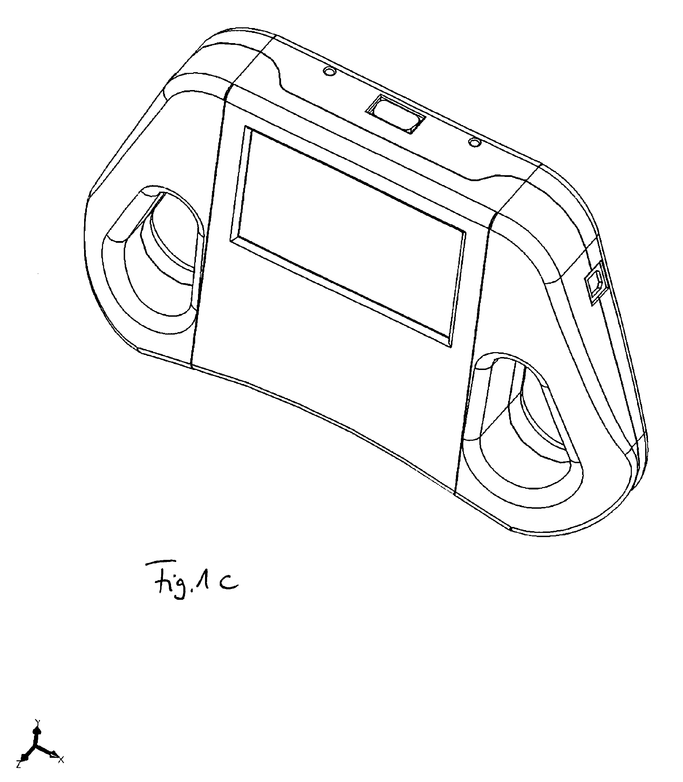

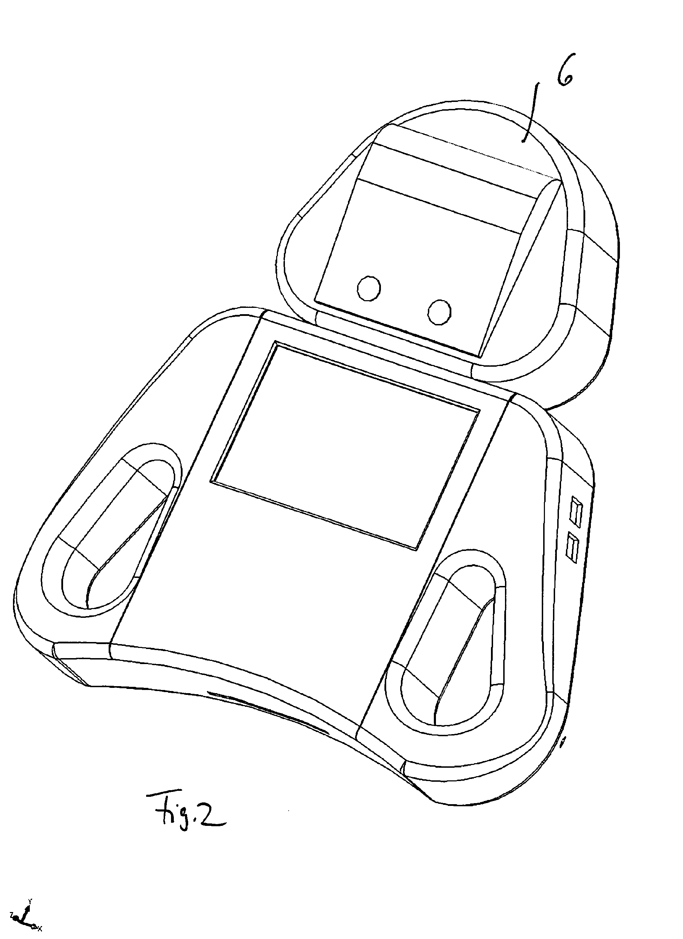

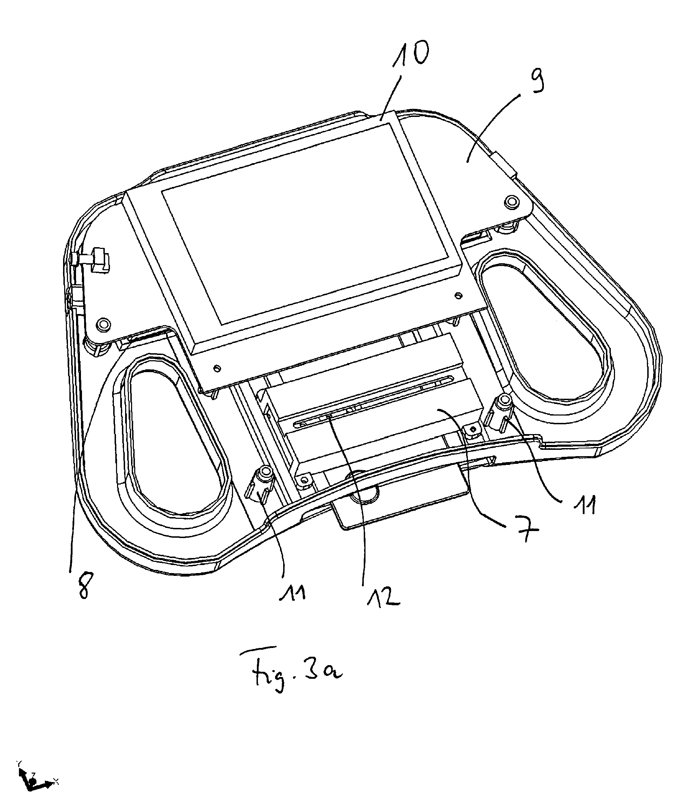

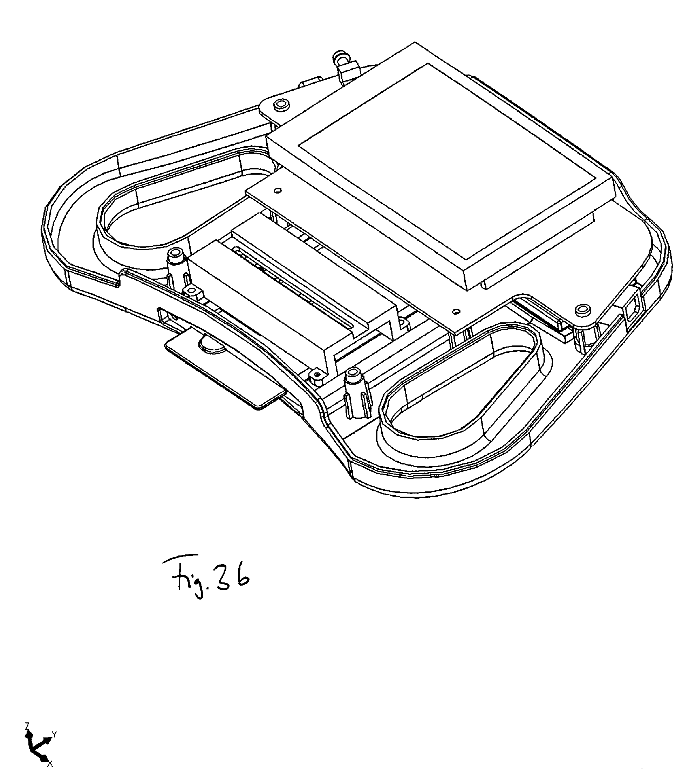

Die Erfindung wird nachfolgend anhand von Ausführungsbeispielen näher erläutert; die Figuren 1a-c, 2, 3a-b, 4a-c, 5 und 6 zeigen ein Gerät beispielhaft näher. Alle Merkmale des nachfolgend beschriebenen Gerätes sind ausschließlich beispielhaft zu verstehen und sollen nur zur Erläuterung einer möglichen Variante dienen; selbstverständlich sind auch andere Realisierungen denkbar.

Bilder 1 a /b/c zeigen das Gesamtgerät. Das Gerät besteht aus zwei Gehäuseschalen, Oberschale 1 und Unterschale 2. Es weist zwei Grifflöcher 3a und 3 b auf. In der Oberschale ist eine Ausnehmung 4 für die Alphanumerische Anzeige eingebracht. In der Unterschale ist einen Kartenschlitz 5 ausgeformt, durch die die Testkarte in den Kartenschacht eingeführt wird. Weiterhin weist das Gehäuse Öffnungen für ein Ladekabel, für den Anschluss eines Druckers und für elektrische USB- Schnittstelle auf.

Bild 2 zeigt das Gerät mit einem angesteckten Druckermodul 6. Die Montage erfolgt durch Aufstecken, ein einfacher Verriegelmechanismus fixiert das Druckermodul am Gerät.

Bild 3 a/ b zeigt das Gerät mit entfernter Oberschale: Direkt über dem Kartenschacht zwischen den Grifflöchern befindet sich die Sensorbaugruppe 7, die in die Unterschale eingeschraubt ist. Der Einbauraum ist so ausgeführt, dass auch anders gestaltete Sensoren eingebaut werden können. Oberhalb der Sensorbaugruppe sind übereinander die Akkus 8, Leiterplatte 9 und Alphanumerische Anzeige 10 eingebaut. In die Unterschale sind Pfosten 11 angeordnet, die der Befestigung von Leiterplatte, Akkus und der Befestigung der Oberschale dienen.

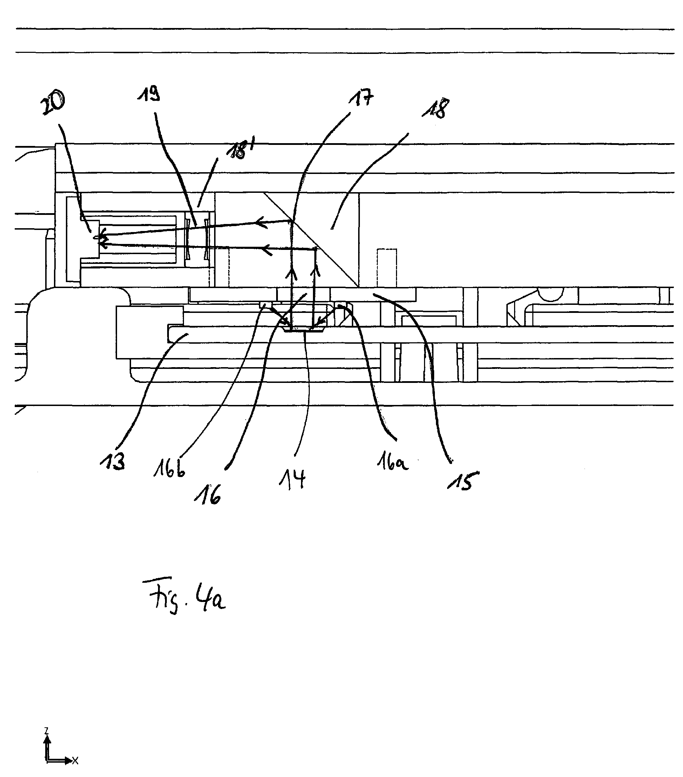

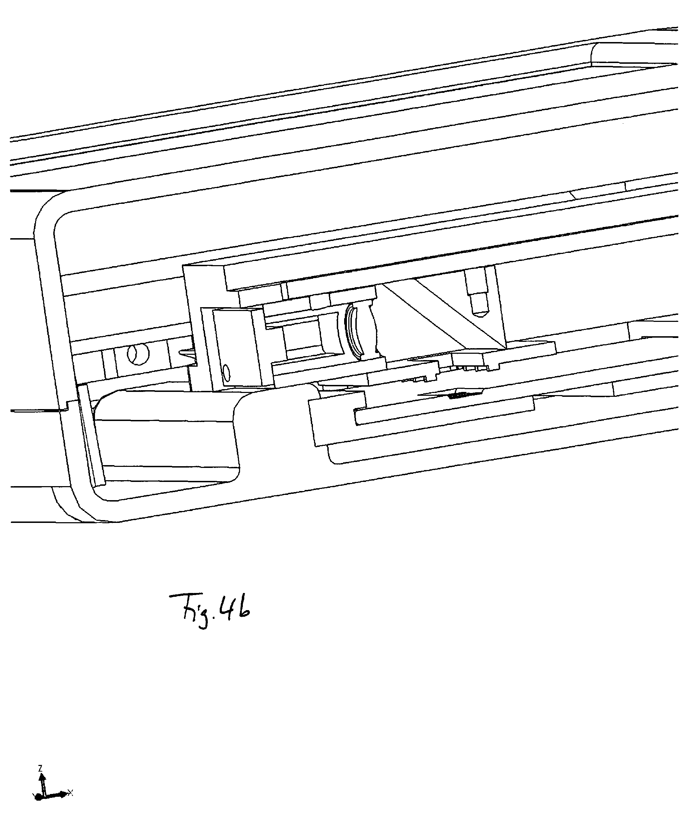

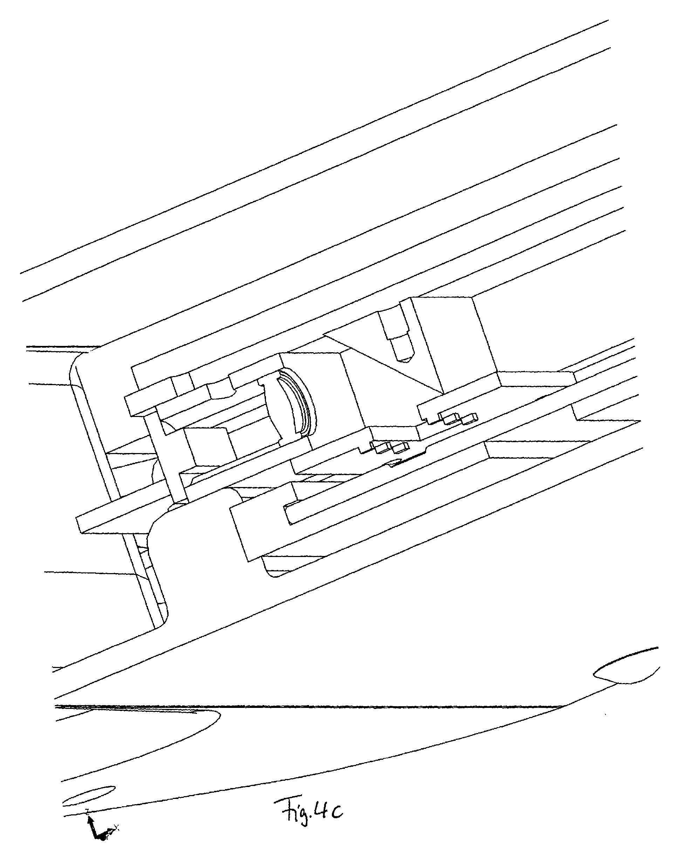

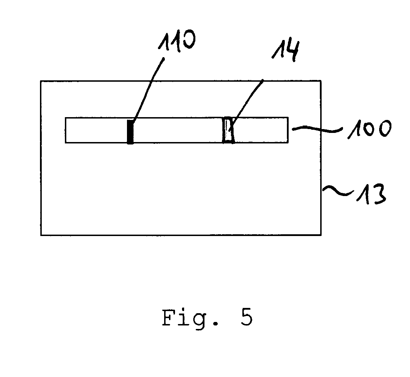

Das Gerät ist modular aus folgenden Baugruppen aufgebaut (vgl. Figuren 4a, 4b, 4c):
Bild 4a zeigt einen Schnitt durch das Gerät und durch das Sensormodul. Kartenschacht mit Sensor: Der Kartenschacht weist eine genau passende Öffnung 12 auf, in die die Testkarte 13 mit einem Testfenster 100 zu Aufnahme einer zu testenden Flüssigkeit wie beispielsweise Blut, mit einem darin befindlichen Kontrollmarker 110 und mit einem darin befindlichen Teststreifen 14 zum Testen der Eigenschaften der Flüssigkeit (vgl. Fig. 5) eingeschoben werden kann. Der Teststreifen 14 wird in eine definierte Position unterhalb eines Verdrahtungsträgers (z.B. Leiterplatte) 15 - Beleuchtungsplatine - mit Beleuchtungselementen 16a, b geschoben. Als Beleuchtungsquellen werden vorzugsweise LED in SMD- Bauweise (Sourface Mounted Devices) verwendet, die eine sehr geringe Bauhöhe aufweisen. Die Beleuchtungselemente sind möglicht dicht am Teststreifen 14 angeordnet. Auf der Beleuchtungsplatine befinden sich nebeneinander mehrer LED, die möglichst dicht am Messobjekt angeordnet sind. Dadurch wird eine gleichmäßige Ausleuchtung des Farbstreifens erreicht. Die reproduzierbare Ausleuchtung des Farbstreifens ist von wesentlicher Bedeutung der Messreproduzierbarkeit und -Genauigkeit
Als LED werden Dreifarb- LED's (sogenannte RGB- LED's) verwendet. Da farbige Substanzen unterschiedliche Wellenlängen verschieden absorbieren, ergeben sich für die drei Farben unterschiedliche Absorptionen und somit unterschiedliche Signale. Der Messablauf erfolgt so, dass nacheinander unterschiedliche Farben die Probe beleuchten und hierfür jeweils das CCD- Signal gemessen wird. Aus der Summe der Signale kann somit auf die Farbe des Farbstreifens geschlossen werden. Außerdem kann durch die Mehrfachmessung die Reproduzierbarkeit erhöht werden. Aus den Mehrfachmessungen werden jeweils die Mittelwerte berechnet.

Der Kartenschacht ist in einem weiteren Ausführungsbeispiel so aufgebaut, dass er auch zwei Messstreifen auf einer Karte erkennen und auswerten kann. Das ist für Karten zum Beispiel von der Firma rennesens wichtig, bei der noch zusätzlich zum h-FABT- Test noch ein Troponin -Test auf der gleichen Karte mit angeordnet ist.

Das Sensormodul ist vorzugsweise bereits so ausgeführt, dass auf der rechten Seite ein weiterer Teststreifen gleichzeitig mit ausgewertet werden kann.

Die Beleuchtungsplatine 15 weist eine Öffnung 16 auf, die den Abmessungen des Teststreifens entspricht. Das Licht aus den Beleuchtungselementen trifft auf den Testreifen, leuchtet den aus, und wird reflektiert bzw. durch verfärbte Bereiche auf dem Teststreifen absorbiert. Das reflektierte Licht gelangt durch die Öffnung 16 hindurch. Erfindungsgemäß wird das Bild von der spiegelnden Oberfläche 17 auf einem Prisma 18 umgelenkt. In einem Linsenhalter 18' ist eine asphärische Linse 19 montiert. Sie kann entlang der optischen Achse verschoben werden, so dass das Abbildungsverhältnis verändert werden kann. Das Bild vom Teststreifen wird somit auf die CCD- Sensormatrix 20 abgebildet.

Durch den Spiegel und den umgelenkten Strahlengang kann auch bei optimaler optischer Abbildung (relativ große Gegenstands-und Bildweite) die Bauhöhe des Gerätes wesentlich verringert werden. Außerdem bewirkt der Spiegel, dass ein Großteil des Beleuchtungs-lichtes der LED ausgeblendet wird. Durch die Umlenkung des Strahlenganges wird weiterhin ermöglicht, dass mehrere dicht benachbarte Teststreifen auf einer gemeinsamen Karte mit separaten CCD's ausgelesen werden können.

Als Empfänger wird beispielsweise eine CCD- Streifenmatrix verwendet, die so angeordnet ist, dass das Bild des Teststreifens längs geschnitten wird. Durch die Abbildung wird bewirkt, dass die Teststreifen in Ihrer Breite auf ca. 5 Matrix- Pixel abgebildet werden.

Die elektronische Auswertung erfolgt über die Streifen- CCD-Matrix, die elektronische Ansteuerschaltung, mit der die Informationen der einzelnen Pixel (also Grauwerte in digitalen Stufen) getaktet ausgelesen werden. Über eine Mikroprozessorsteuerung werden die Werte gespeichert. Im Unterschied zu den oben beschriebenen Lösung (CardioDetect Quant), bei der Standard-Bilderkennungssysteme verwendet wird) detektiert das System direkt die Pixel- Informationen der Teststreifen. Das Bild 6 (zeigt die ausgelesene Information von den CCD- Zeile, die detektierten Grauwerte einer CCD- Zeile als Bildschnitt durch den Teststreifen.

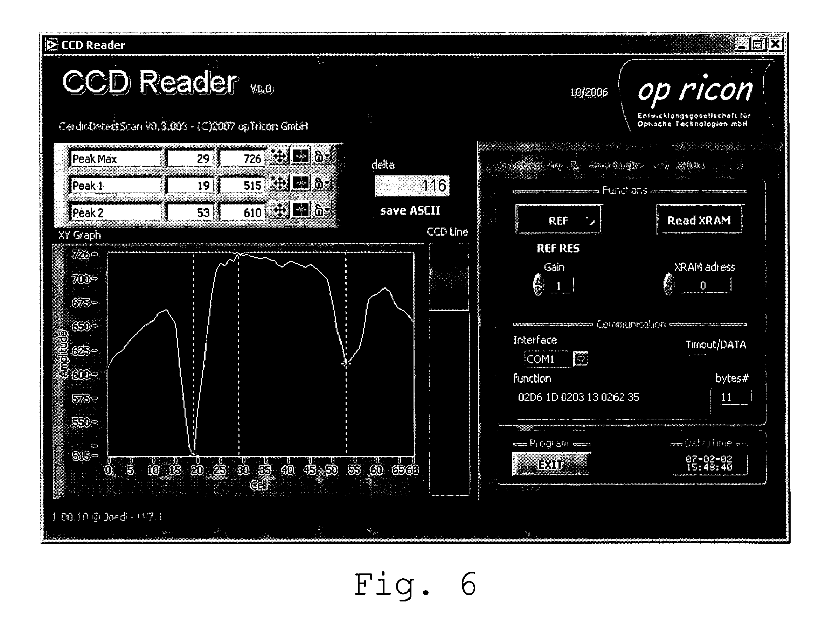

Das Diagramm in Figur 6 zeigt den Verlauf der Reflexion entlang der CCD- Matrix. Man sieht deutlich zwei Minima bezüglich der Reflexion, da das Licht an den Teststreifen absorbiert wird und nicht zur CCD gelangt. Das linke Minimum zeigt eine hohe Absorption im Bereich eines Kontrollmarkers 110 auf. Dieser zeigt an, dass der Test funktioniert. Weiter rechts erkennt man die Absorption des Teststreifens, herrührend aus der Absorption des Streifens, der die Schwere des Vorfalles anzeigen soll. Je kleiner der Wert im Minimum ist, umso schwerer war der Herzinfarkt.

Die Maxima zeigen den weißen - unveränderten - Bereich des Teststreifens, hier wird das Licht maximal reflektiert. Dieser Bereich dient zur Kalibrierung des Sensors.

Aus diesem Kurvenverlauf werden vorzugsweise folgende Auswertungen vorgenommen:
- Kontrollstrich vorhanden, Test funktioniert
- Kalibrierung: Vergleichswert ist der weiße Kartenhintergrund
- Quantifizierung des Testwertes. Bewertung der der "Tiefe der Schlucht", dass heißt der Absorption als Maß der Konzentration des h-FABT im Blut der Testperson.
- Klasseneinteilung: Als Referenznormal sind Messungen mit geeichten Karten, bei denen die Konzentration des h-FABT's in ng/ml genau bekannt ist, hinterlegt. Die Mikroprozessorsteuerung vollzieht einen Vergleich des gemessenen Wertes mit den hinterlegten Werten, und gibt den Wert aus.

Als Anzeige wird bevorzugt ein alphanumerisches Touchscreen verwendet. Dieses Display bietet sich für diese Gerät deshalb an, weil es auf zusätzliche Bedienelemente verzichten kann. In einem übersichtlichen und logischen Menü wird der Operator aufgefordert, mit einem beiliegenden Stift (oder spitzen Gegenstand) in entsprechenden Feldern Eintragungen (wie zum Beispiel den Namen des Patienten oder die Uhrzeit) vorzunehmen. Das Display ist auch von ungeübtem Personal in Stresszuständen einfach zu bedienen. Angezeigt wird der Wert der Konzentration des h-FABT's in ng/ml. Die Anzeigemöglichkeiten sind beliebig erweiterbar, indem eine andere Software installiert wird.

Eine bevorzugte Erweiterungsmöglichkeit ist die, dass die Telefonnummer des Notdienstes bzw. des behandelnden Hausarztes mit eingegeben werden kann. In einer weiteren Ausbaustufe ist es vorgesehen, das Gerät mit einer Blue- Tooth Schnittstelle bzw. mit DECT- Handy (WLAN...) zu versehen, so dass im Fall eines lebensbedrohlichen Ergebnisses automatisch ein Notruf gesendet werden kann.

Die separate Mikroprozessorsteuerung hat den Vorteil, dass das Gerät einerseits autonom funktioniert anderseits von teuren Betriebssystemen unabhängig ist.

Folgende Schnittstellen können beispielsweise vorgesehen sein:
- Separate Datenausgabe über einen Drucker. Dafür wird ein mobiler Drucker an das Gerät angedockt und druckt die Patientendaten und den Befund auf einem Etikett aus. Das Etikett wird gut sichtbar auf die Patientenakte aufgeklebt und gibt dem Ärzteteam wichtige Handlungshinweise.
- USB- Schnittstelle: Für Datentransfer zu einem Computer mit Betriebssystem.
- Stromanschluss (220 V, 50 Hz) zum Laden der Accus.

Zur Stromversorgung sind vorzusgweise zwei Lithium- Polymer-Accus eingebaut, davon dient einer als Reserveakku. Die Accus sind wiederaufladbar. Auf der Platine ist eine entsprechende Ladeschaltung implementiert. Die Accus verfügen über eine separate Schutz vor Überladung. In der Anzeige warnt eine Anzeige vor der vollständigen Entleerung der Accus.

Zusammengefasst zeigen die Figuren beispielhaft ein mobiles Gerät für die Teststreifenanalytik für Fachpersonal und für die Patientenselbstanalyse, das in einfacher Weise dem Patienten oder Ärzten Hinweise auf die weitere ärztliche Behandlung gibt. Durch den modularen Aufbau ist es leicht modifizierbar auf eine Vielzahl von Streifentests, ist durch seinen einfachen Aufbau und Anzeige leicht und selbsterklärend bedienbar. Es verfügt über seine eigene elektronische Steuerung und ist von teuren kommerziellen Betriebssystemen unabhängig. Da es kostengünstig herstellbar ist, hat es großes Potential in der Patientenselbstanalyse und kann wesentlich die Lebenserwartung von Risikopatienten erhöhen.

Die Merkmale des Gerätes können beispielsweise also die folgenden sein:
- Mobiles Handgerät, das deutlich flacher und leichter als herkömmliche Geräte ist.
- Autonomer Betrieb: Es wird kein zusätzlicher Rechner benötigt, kein Netzanschluss und somit für den mobilen Einsatz geeignet.
- Ist für den universellen Einsatz geeignet, sowohl für andere Kartenformate als auch für die qualitative Bewertung von Farbumschlägen auf Teststreifen.

Das Gerät wird bevorzugt folgenden Anforderungen gerecht:
a. Autonomes Handgerät: Der Schnelle Einsatz vor Ort erfordert ein autonomes Handgerät, in dem alle zur Diagnostik und Reporting notwendige Funktionen vereint sind.
b. Netzunabhängigkeit: Betrieb über möglichst lange Zeit ohne Stromnetz
c. Logig: Das Gerät sollte über eine eigene Mikroprozessorsteuerung verfügen, aber aus Kostengründen nicht auf ein Betriebssystem angewiesen sein. Die Geräte- Software sollte über geeignete Schnittstellen mit handelsüblichen Betriebssystemen kommunizieren können, ohne auf diese angewiesen zu sein. Die Software soll update-bar sein, und gleichzeitig vor Produktpiraten geschützt sein.
d. Einfache Bedienbarkeit: Der Test sollte auch von ungeschultes Personal, also der Testperson selbst, in emotional angespanntem Zustand durchgeführt werden können.
e. Messreproduzierbarkeit: Die Konzentration des Markers muss reproduzierbar qualitativ bewertet werden können.
f. Ausgabe: Gerät sollte eine einfache und schnelle Ausgabemöglichkeit aufweisen, vorzugsweise durch einen ansteckbaren Drucker. Über eine USB- Schnittstelle sollten die Daten mit einem Rechner auslesbar sein.
g. Miniaturisierung: Das Gerät sollte eine minimale Bauhöhe und ein geringes Gewicht aufweisen.
h. Hilfe rufen: Das Gerät sollte mit einer separaten programmierbaren Schnittstelle für Risikopatenten ausgestattet sein, die im Fall eines positiven Befundes eine Verbindung zu einer Rettungsstelle automatisch herstellt und damit die Überlebenschance wesentlich erhöht.
i. Multifunktionalität: Das Gerät sollte aus austauschbaren Baugruppen (modularer Aufbau) bestehen, so dass es auch für andere Tests Farbumschläge detektieren kann.

## Patentansprüche

1. Gerät zum Auswerten einer Testprobe, insbesondere einer medizinischen Testprobe mit
- zumindest einer Strahlungsquelle (16a, 16b) zum Erzeugen einer elektromagnetischen Strahlung,
- einer Messeinrichtung (20) zum Messen der von der Testprobe reflektierten Strahlung und
- einer Auswerteinrichtung, die das Reflexionsmessergebnis der Messeinrichtung auswertet und damit ein Auswertergebnis bildet,
**dadurch gekennzeichnet dass**
- ein Träger (15) vorhanden ist, der die zumindest eine Strahlungsquelle trägt, wobei der Träger und die zumindest eine Strahlungsquelle derart angeordnet sind, dass elektromagnetische Strahlung der Strahlungsquelle auf eine in das Gerät eingesetzte Testprobe fällt, und
- der Träger eine Durchtrittsöffnung (16) aufweist, die derart angeordnet ist, dass von der Testprobe reflektierte Strahlung den Träger durch die Durchtrittsöffnung passieren kann.

2. Gerät nach Anspruch 1, **dadurch gekennzeichnet, dass** das Gerät eine Spiegeleinrichtung (18, 19) umfasst, die die reflektierte Strahlung nach dem Passieren der Durchtrittsöffnung auf die Messeinrichtung zum Messen der von der Testprobe reflektierten Strahlung umlenkt.

3. Gerät nach Anspruch 1 oder 2, **dadurch gekennzeichnet, dass** der Träger durch einen Verdrahtungsträger gebildet ist, der einen elektrischen Anschluss für die zumindest eine Strahlungsquelle bereitstellt.

4. Gerät nach Anspruch 3, **dadurch gekennzeichnet, dass** der Verdrahtungsträger durch eine elektrische Leiterplatte gebildet ist.

5. Gerät nach einem der voranstehenden Ansprüche, **dadurch gekennzeichnet, dass** die Spiegeleinrichtung ein Prisma umfasst.

6. Gerät nach einem der voranstehenden Ansprüche, **dadurch gekennzeichnet dass** die Strahlungsquelle zum Erzeugen einer elektromagnetischen Strahlung mit zumindest zwei unterschiedliche Wellenlängen oder Wellenlängenbereichen geeignet ist.

7. Gerät nach Anspruch 6, **dadurch gekennzeichnet,**
**dass** die Messeinrichtung geeignet ist, das Reflexionsverhalten der Testprobe für zumindest zwei unterschiedliche Wellenlängen oder Wellenlängenbereiche unter Bildung zumindest zweier Reflexionsmessergebnisse zu messen und
**dass** die Auswerteinrichtung derart ausgestaltet ist, dass sie die zumindest zwei Reflexionsmessergebnisse zur Bildung des Auswertergebnisses heranzieht.

8. Gerät nach Anspruch 7, **dadurch gekennzeichnet,**
**dass** die Auswerteinrichtung derart ausgestaltet ist, dass sie die zumindest zwei Reflexionsmessergebnisse unter Bildung eines Mittelwertes mittelt und mit dem Mittelwert das Auswertergebnis bildet, und
**dass** die Bildung des Mittelwertes gewichtet erfolgt, indem Reflexionsmessergebnisse in Abhängigkeit von der Wellenlänge oder dem Wellenlängenbereich der jeweiligen elektromagnetischen Strahlung unterschiedlich bewertet in die Mittelwertbildung einbezogen werden.

9. Gerät nach einem der voranstehenden Ansprüche, **dadurch gekennzeichnet, dass**
- mit der Auswerteinrichtung eine Speichereinrichtung in Verbindung steht, in der eine vorgegebene Auswerttabelle abgespeichert ist, in der Auswertergebnisse in Abhängigkeit von Messwerten für die zumindest zwei Reflexionsmessergebnisse abgelegt sind, und
- die Auswerteinrichtung derart ausgebildet ist, dass sie das Auswertergebnis aus der vorgegebenen Auswerttabelle in Abhängigkeit von den zumindest zwei Reflexionsmessergebnissen ausliest.

10. Verfahren zum Auswerten einer Testprobe, insbesondere einer medizinischen Testprobe, bei dem elektromagnetische Strahlung mit einer vorgegebenen Wellenlänge oder einem vorgegebenen Wellenlängenbereich auf die Testprobe gerichtet wird und die von der Testprobe reflektierte Strahlung unter Bildung eines Auswertergebnisses ausgewertet wird,
**dadurch gekennzeichnet dass**
das Reflexionsverhalten der Testprobe für zumindest zwei unterschiedliche Wellenlängen oder Wellenlängenbereiche unter Bildung zumindest zweier Reflexionsmessergebnisse bestimmt wird und die zumindest zwei Reflexionsmessergebnisse zur Bildung des Auswertergebnisses herangezogen werden.
